# EUROPEAN PATENT APPLICATION

(11) **EP 2 106 691 A1**
(43) Date of publication of application: **07.10.2009**
(21) Application number: 09157047.3
(22) Date of filing: 01.04.2009
(51) Int. Cl.: A01G 23/083

(54) **Timber-handling grab**

(30) Priority: 01.04.2008 FI 20085268
(71) Applicant: Moisio Forest OY, 44670 Suovanlahti (FI)
(72) Inventor: Moisio, Tuomas, 44500, VIITASAARI (FI)
(74) Representative: Helke, Kimmo Kalervo

(57) **Abstract**

The invention relates to a timber-handling grab, which includes a frame (1) and a grab (18) equipped with operating devices. The grab is formed of opposing jaws (19) pivoted on the arms (45, 46) of the frame (1), extending between the arms (45, 46). The timber-handling grab possibly also includes one or more of the following components, i.e. a cutting device (49), collector jaws (50), a feed device (51), and/or stripping blades (52). Several alternative attachment points (2 - 17) are arranged on the frame (1), for attaching alternative components to the frame (1).

## Description

The present invention relates to a timber-handling grab, which includes a frame and a grab equipped with operating devices, which grab is formed of opposing jaws pivoted on the arms of the frame, extending between the arms, as well as possibly one or more of the following components, i.e. a cutting device, collector jaws, a feed device, and/or stripping blades.

In its simplest form, a timber-handling grab includes a frame and a grab equipped with operating devices. Thus it is a question of a loading grab, by means of which trees are moved in connection with loading and unloading. There also exist simple timber-handling grabs, in which there is a cutting device, in order to create a felling head. The felling head can be used, for example, in thinning felling to fell and load commercial timber. Development has moved from felling heads to collector energy-timber grabs, in which there are collector jaws. Using such an energy-timber grab, several tree trunks can be collected, moving at times from one trunk to the next. There also exist harvesters, in which there are, in addition, feed devices and stripping blades. In addition to felling, it is then possible to strip a tree and cut it into parts of a desired dimension.

Each timber-handling grab has certain specific features, which largely determine the construction of the timber-handling grab and its frame. In practice, there must be different timber-handling grabs for different tasks. Thus an operator, such as a contractor, may have from four to five different types of timber-handling grab, which are changed on the work machine as required. Firstly, changing is labourious and the transportation of timber-handling grabs demands additional equipment. Secondly, capital is tied up in the timber-handling grabs. In addition, manufacturers have specialized in particular types of timber-handling grabs. Thus, there are timber-handling grabs from several manufacturers on the market, so that the contractor must learn the properties of the different timber-handling grabs. The control system also require tailoring while some timber-handling grabs may be entirely unsuited to certain work machines.

The invention is intended to create a new type of timber-handling grab, with more diverse properties than previously, but which is more economical than previously to purchase and operate. The characteristic features of the present invention are stated in the accompanying Claims. In the timber-handling grab according to the invention, a general-purpose-model frame is utilized, to which various components can be attached, in order to form a timber-handling grab that can be used for a specific purpose. Preferably, the components can even be changed when the handling requirement changes. This avoids changing the entire timber-handling grab, which accelerates moving from one work task to another and clearly reduces the capital tied up in equipment. As the basic structure remains the same, maintenance of the timber-handling grab is also facilitated. In addition, the control system remains essentially the same.

In the following, the invention is described in detail with reference to the accompanying drawings showing some embodiments of the invention, in which
- Figure 1: shows the frame of the timber-handling grab according to the invention, seen at an angle from above,
- Figure 2: shows the frame of Figure 1, seen at an angle from below,
- Figure 3: shows the frame of the timber-handling grab according to the invention, equipped with a single component, seen at an angle from above,
- Figure 4: shows a front view of the frame of Figure 3,

- Figure 5: shows the frame of the timber-handling grab according to the invention, equipped with a second component, seen at an angle from above,
- Figure 6: shows the frame of Figure 5, seen at an angle from below,
- Figure 7: shows a variation of the frame of Figure 5, seen at an angle from above,
- Figure 8: shows a variation of the frame of Figure 5, seen at an angle from below,
- Figure 9: shows the frame of the timber-handling grab according to the invention, equipped with a third component, seen at an angle from below,
- Figure 10: shows the frame of the timber-handling grab according to the invention, equipped with two components, seen at an angle from below,
- Figure 11: shows the frame of the timber-handling grab according to the invention, equipped with a fourth component, seen at an angle from above,
- Figure 12: shows a side view of the frame of Figure 11,
- Figure 13: shows a variation of the frame of Figure 11, seen at an angle from above,
- Figure 14: shows a side view of a variation of the frame of Figure 11,
- Figure 15: shows the frame of the timber-handling grab according to the invention, equipped with a fifth component, seen at an angle from above,
- Figure 16: shows a side view of the frame of Figure 15,
- Figure 17: shows the frame of the timber-handling grab according to the invention, equipped with two components, seen at an angle from above,
- Figure 18: shows a side view of the frame of Figure 17,
- Figures 19 - 24: show various assemblies of the timber-handling grab according to the invention,
- Figure 25: shows a front view of the timber-handling grab according to the invention, seen at an angle from above,
- Figure 26a: shows the hydraulics block of one model of the timber-handling grab according to the invention,
- Figure 26b: shows the hydraulics blocks of a second model of the timber-handling grab according to the invention, and
- Figure 26c: shows the hydraulics blocks of a third model of the timber-handling grab according to the invention.

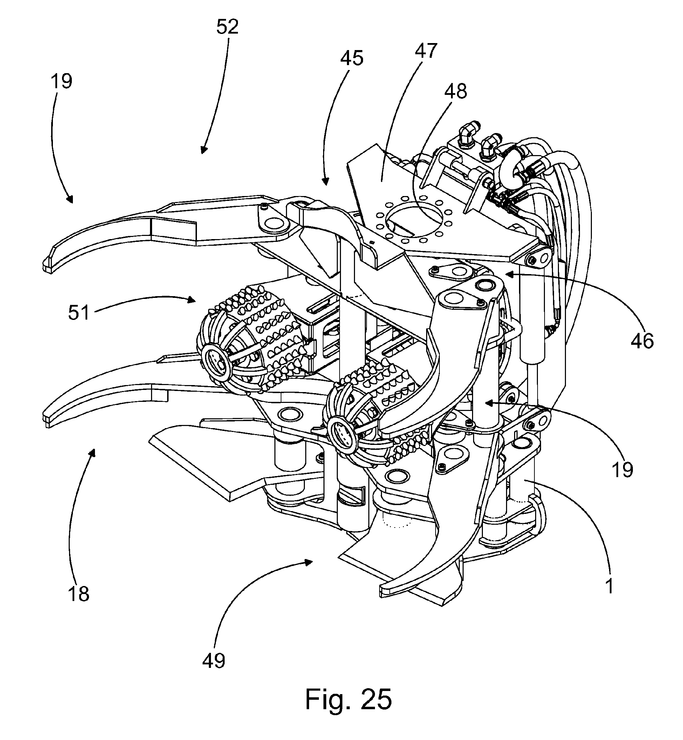

Figure 25 shows the timber-handling grab according to the invention, without a rotator. Generally, the timber-handling grab includes a frame 1 and a grab 18 equipped with operating devices. The grab 18 is formed of opposing jaws 19, which are pivoted on the arms 45 and 46 of the frame 1. The jaws 19 protrude from between the arms 45 and 46. Thus, by rotating the jaws, the trees are pressed between the jaws and the frame. In the frame, there is also pivoted a crosshead 47, in the opening 48 in which a rotator is attached, which is then attached to the boom (not shown) of the work machine. The frame will rotate through about 90° relative to the crosshead. Thus, besides normal loading, the timber-handling grab can also be used to grip a standing tree. The operating devices of the grab, and also of the other components, are usually operated by means of the machine's hydraulics, as is the boom.

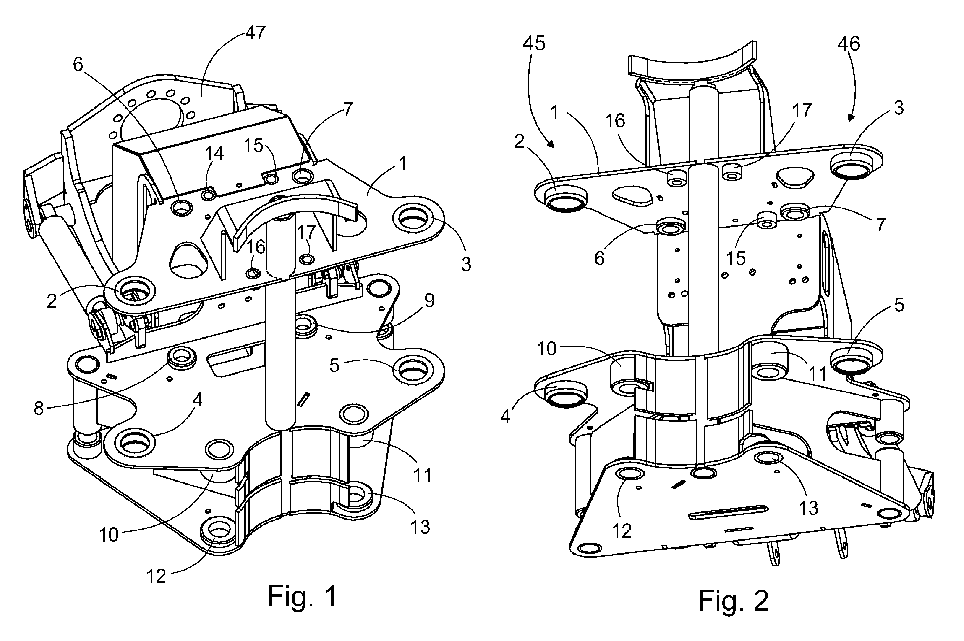

Depending on the application, the timber-handling grab may possibly also include one or more of the following components, i.e. a cutting device 49, collector jaws 50, a feed device 51, and/or stripping blades 52. In the timber-handling grab in Figure 25, there are two grabs 18, as well as a cutting device 49 and a feed device 51. The timber-handling grab in question, can then be used to load, collect, and feed. Stated generally, several alternative attachment points 2 - 17 are arranged in the frame 1 according to the invention, for attaching alternative components to the frame 1 (Figures 1 - 4). In other words, the frame is designed and dimensioned in such a way that different components can be attached, allowing the properties of the timber-handling grab to be altered as desired. The components are preferably attached detachably to the frame and/or to an auxiliary frame, so that the components can be easily changed as required. Embodiments of the timber-handling grab according to the invention are described in greater detail with reference to Figures 1 - 24.

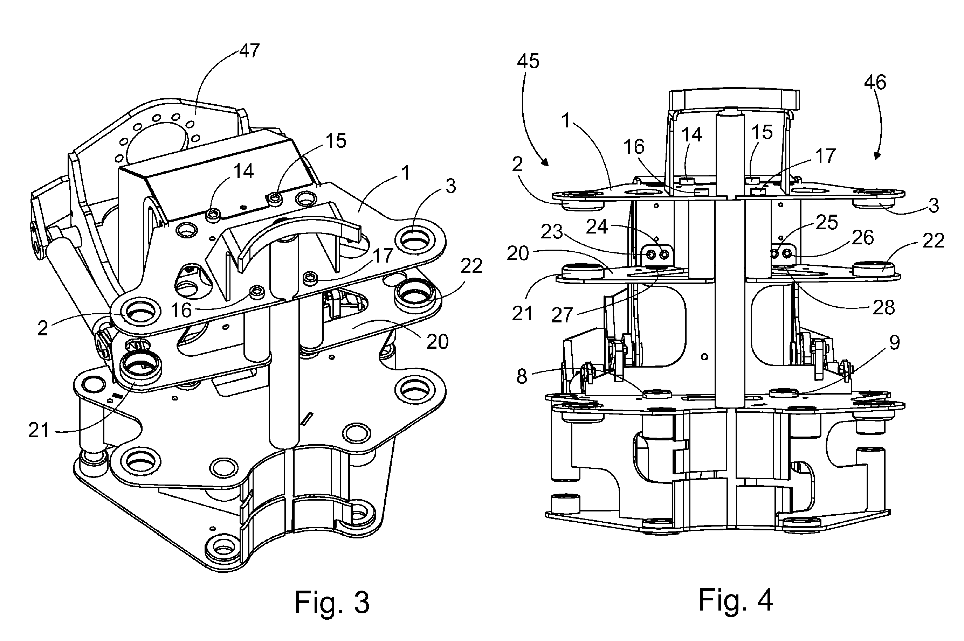

One component that is additional to the components referred to above, is an auxiliary frame 20, which is arranged to be attached to the frame 1, in order to support alternative components (Figures 3 - 4). Thanks to the auxiliary frame, new kinds of component can be used, which are, in addition, now attached more securely than previously. Additional attachment points are also arranged in the auxiliary frame, for attaching alternative components to the frame. In other words, the components are attached, either to the frame by utilizing the attachment points, or between the frame and the auxiliary frame by utilizing the attachment points and additional attachment points. An additional auxiliary frame, which is located at the opposite end of the frame to the auxiliary frame (not shown), can also be used. In that case, the component is attached between the frame and the auxiliary frame and/or between the auxiliary frame and the additional auxiliary frame.

The attachment points 2 - 17 are generally feed-throughs or bearing recesses. Correspondingly, the additional attachment points 21 and 22, and 27 and 28 are feed-throughs or bearing recesses (Figure 4). The auxiliary frame 20 is attached to the frame 1 by means of bolts 23 - 26. The attachment pints 14 - 17 of the frame 1 are particularly for attaching the auxiliary frame 20, in this case with bolts. The construction of the attachment points and the components attached to them is described in greater detail in connection with the figures.

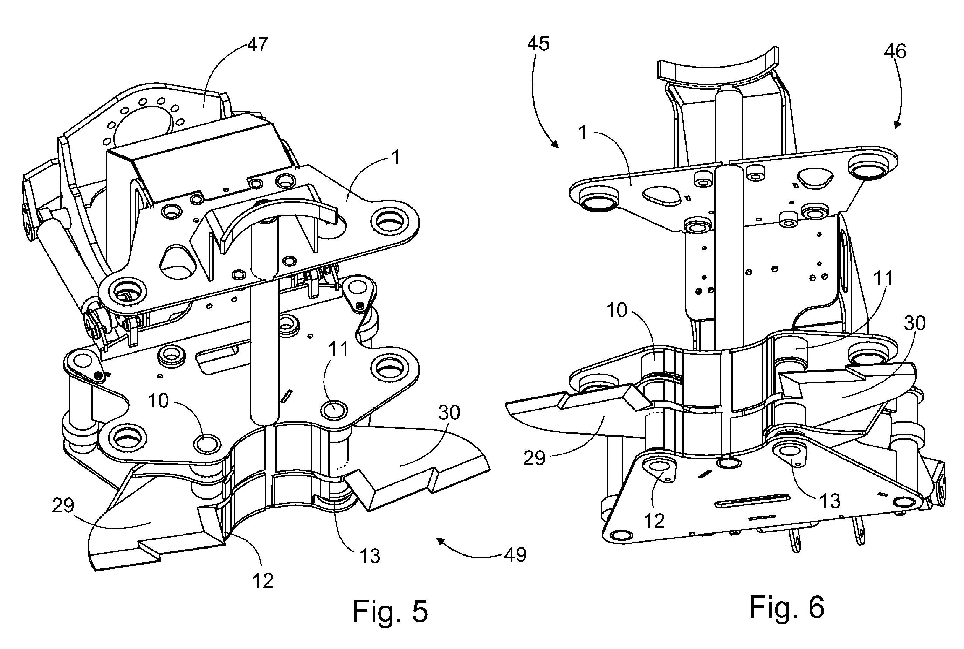

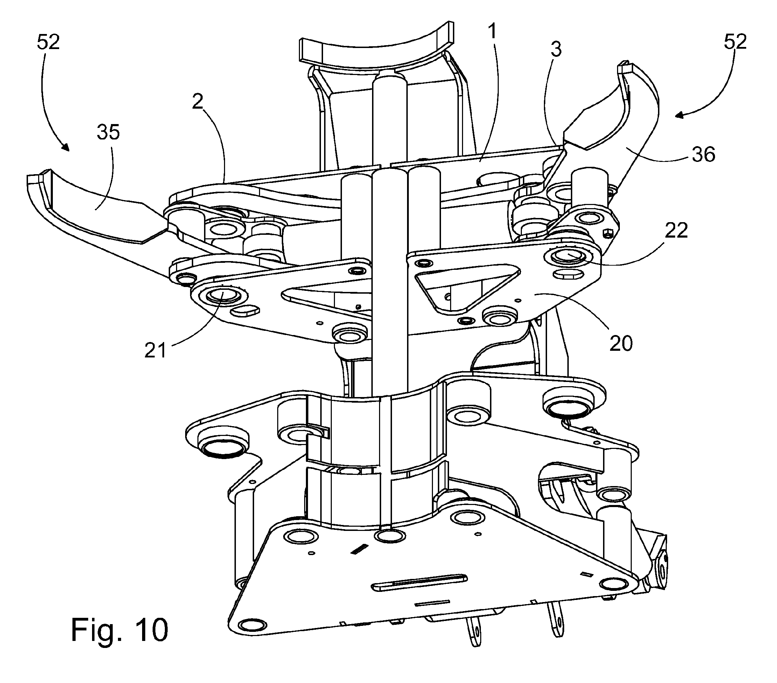

Figures 1 and 2 show only the multi-purpose frame 1 according to the invention, to which only the crosshead 47 is attached. In the frame 1 there are several attachment points, which are referred to by reference numbers 2 - 17. The attachment points can also be referred to as attachment surfaces. Components, which are referred to by reference numbers 29 - 44 (Figures 5 - 18), can be attached to these attachment points. In addition, an auxiliary frame 20 can be attached to the attachment points 14 - 17 and 23 - 26 of the frame 1, which can be seen especially in Figures 3 and 4. The auxiliary frame 20 too includes attachment points 21 and 22, and 27 and 28. Components, which are referred to by reference numbers 35, 36, 39, 40, 43, and 44, in Figures 10, 13, 14, 17, and 18, can be attached to these attachment points.

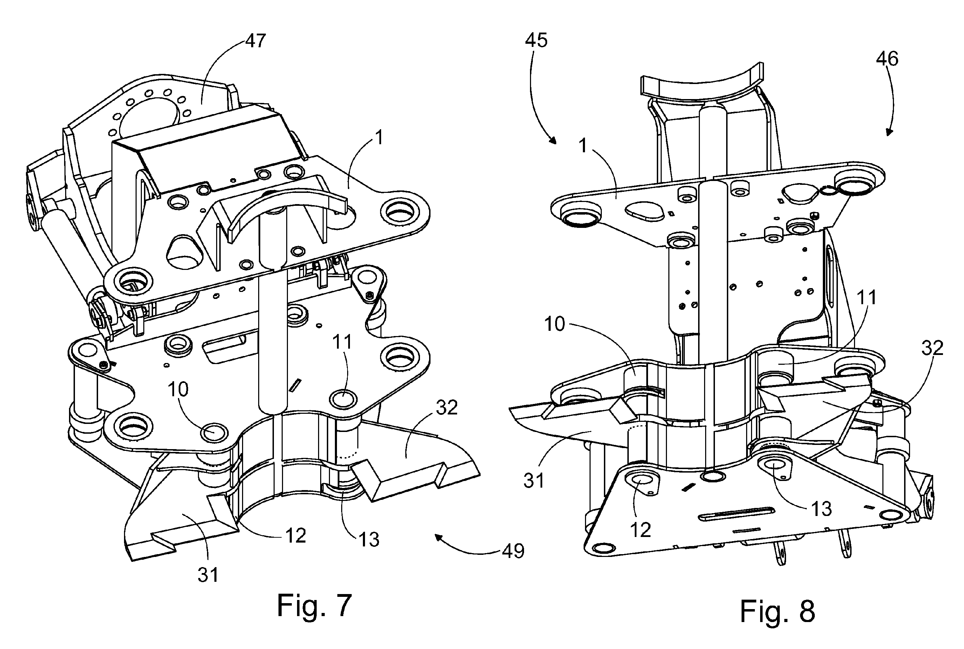

In Figures 5 and 6, guillotine blades 29 and 30, which are attached using pins fitted to the attachment points 10 - 13, are attached to the frame 1. The attachment points, together with the pins, form a sturdy set of bearings, which permit the guillotine blades to rotate. In this case, the guillotine blades 29 and 30 are shown in the open position. A cutting device of this kind is fast and efficient. The operating elements of the cutting device are located in a protected position inside the frame 1. In Figures 5 and 6, the guillotine blades 29 and 30 are intended for large trees. Guillotine blades 31 and 32 intended for small trees are shown in Figures 7 and 8, according to Figures 5 and 6.

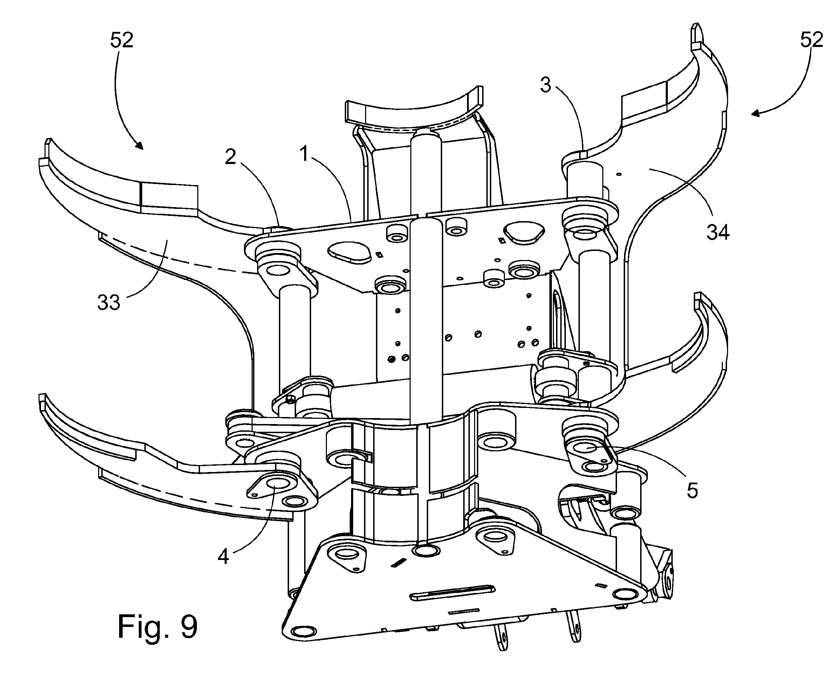

Figure 9 shows a timber-handling grab intended for large trees and for loading trees, in which stripping and loading blades 33 and 34 are attached to the frame 1. The stripping and loading blade 33 including two jaws is attached to the attachment points 2 and 4 of the frame 1, a second corresponding stripping and loading blade 34 being attached to the attachment points 3 and 4 of the frame 1. The operating devices of the stripping and loading blades 33 and 34 are located in a protected position inside the frame. Figure 10 shows a timber-handling grab intended for small trees, in which stripping blades 35 and 36 are attached to the frame 1. In this case, an auxiliary frame 20 according to the invention is utilized in such a way that the stripping blade 35 is attached to attachment point 2 of the frame 1 and to additional attachment point 21 of the auxiliary frame 20. A second corresponding stripping blade 36 is attached to attachment point 3 of the frame 1 and to additional attachment point of the auxiliary frame 20. The operating devices of the stripping blades 35 and 36 are located in a protected position between the frame and the auxiliary frame. In Figures 9 and 10 the stripping and loading blades are shown in the open position.

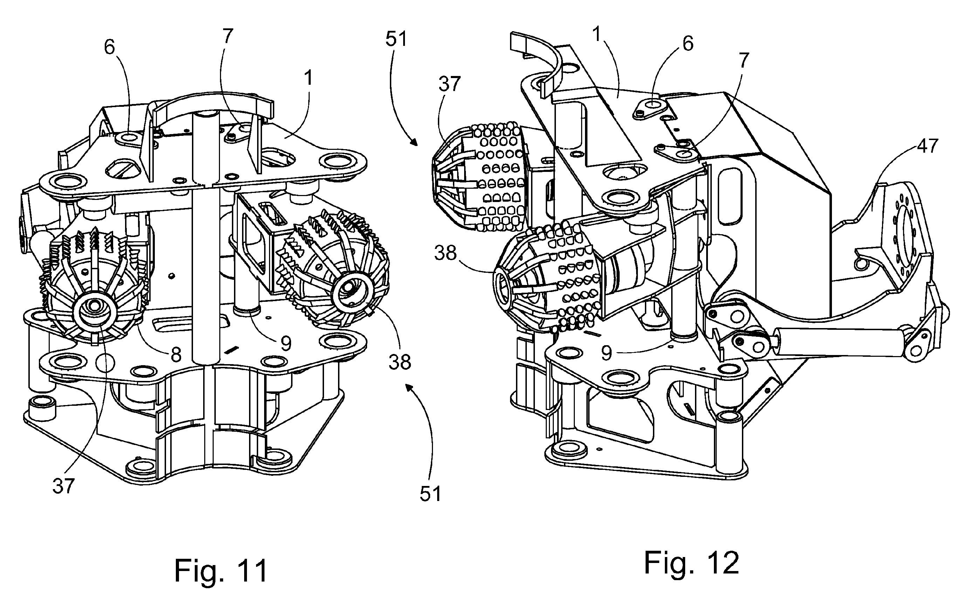

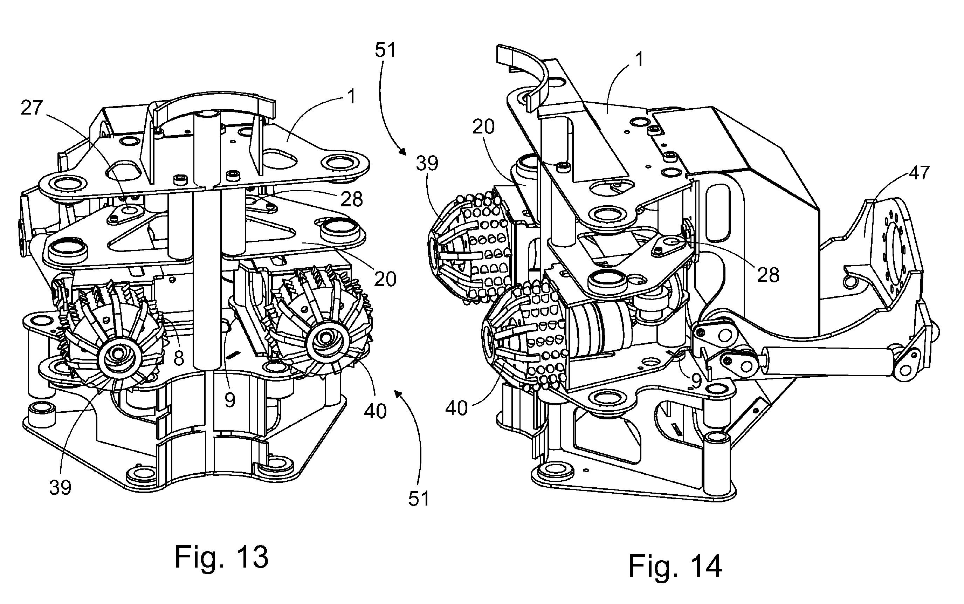

In Figures 11 and 12, tree-feed rollers 37 and 38 are attached to the frame 1. The feed rollers 37 and 38 shown here are intended for large trees and are shown in the open position. When feeding trees, the feed rollers are pressed against the tree and rotated by hydraulic motors. Feed roller 37 is attached to attachment points 6 and 8 of the frame 1, the second corresponding feed roller 38 being attached to attachment points 7 and 9 of the frame 1. In this case too, the operating devices are located in a protected position inside the frame. Figures 13 and 14 show a timber-handling grab intended for small trees, in which tree-feed rollers 39 and 40 are attached to the frame 1. In this case, an auxiliary frame 20 according to the invention is utilized, in such a way that feed roller 39 is attached to attachment point 8 of the frame 1 and to additional attachment point 27 of the auxiliary frame 20. The second corresponding feed roller 40 is attached to attachment point 9 of the frame 1 and to additional attachment point 28 of the auxiliary frame 20. In Figures 11 - 16, the crosshead 47 has been rotated through 90°, compared to the position shown in Figure 25.

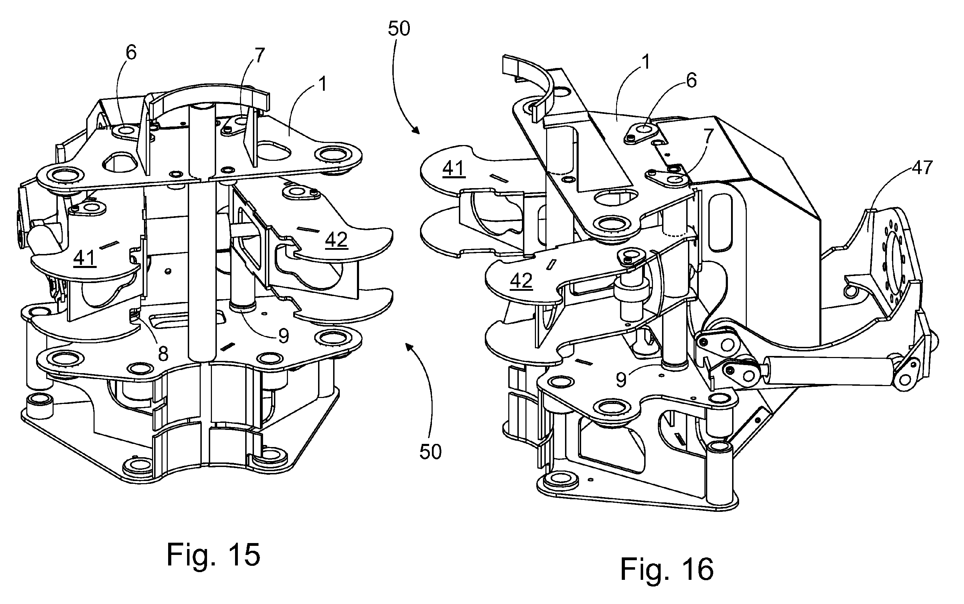

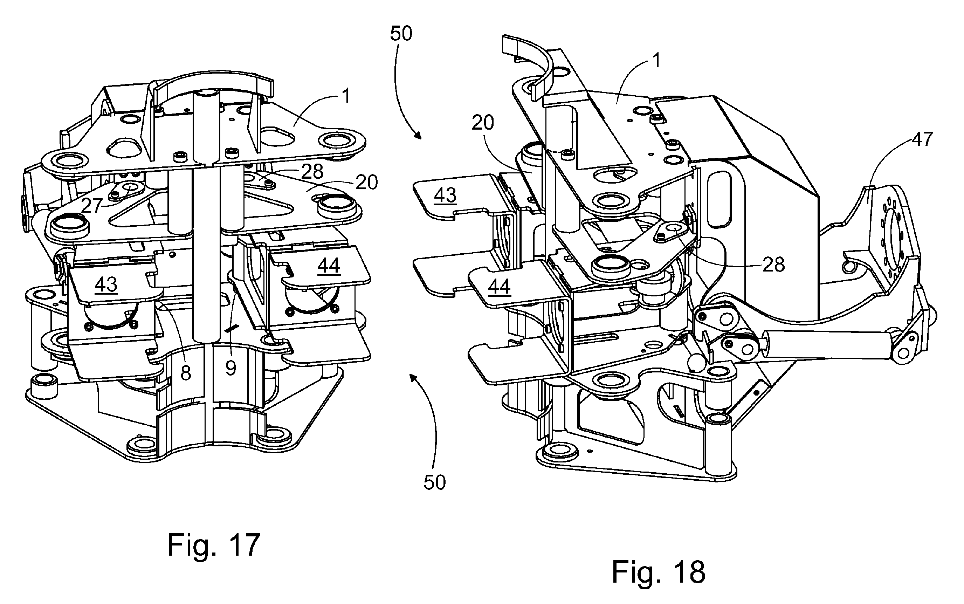

In Figures 15 and 16, tree-collector grippers 41 and 42 are attached to the frame 1. In this case, the collector grippers 41 and 42 are intended for large trees and are shown in the open position. When collecting trees, the collector grippers are pressed against the tree or trees, which permits the timber-handing grab to be moved beside the next trees. Collector gripper 41 is attached to attachment points 6 and 8 of the frame 1, the second corresponding collector gripper 42 being attached to attachment points 7 and 9 of the frame 1. In this case too, the operating devices are located in a protected position inside the frame. Figures 17 and 18 show a timber-handling grab intended for small trees, in which tree-collector grippers 43 and 44 are attached to the frame 1. In this case, an auxiliary frame 20 according to the invention is utilized, in such a way that collector gripper 43 is attached to attachment point of the frame 1 and to additional attachment point 27 of the auxiliary frame 20. The second corresponding collector gripper 44 is attached to attachment point 9 of the frame 1 and to additional attachment point 28 of the auxiliary frame 20.

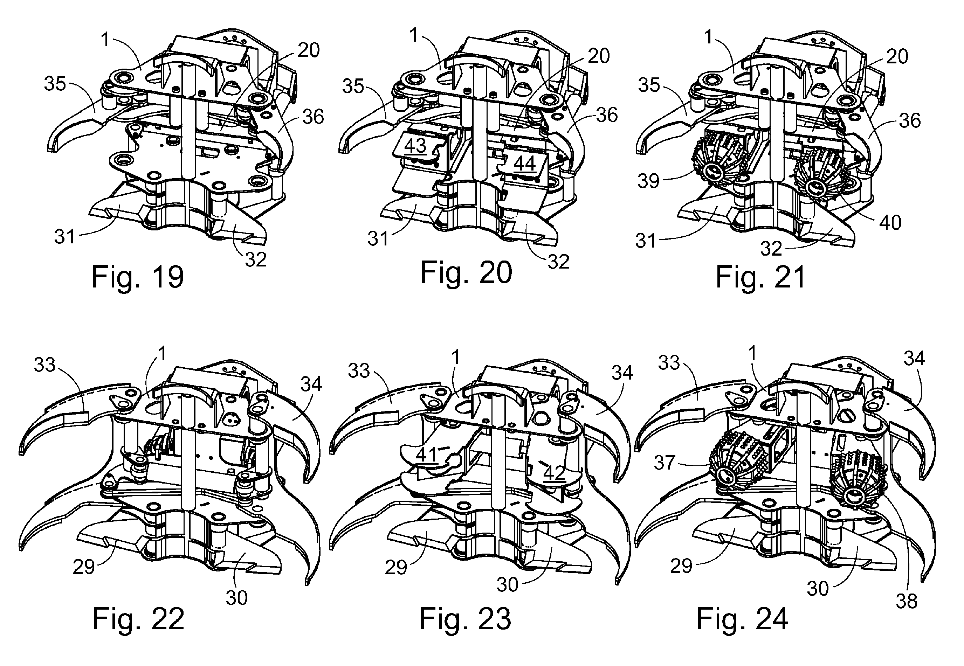

Figures 19 - 24 show six different example assemblies of the timber-handling grab according to the invention. In Figure 19, the frame 1 of the timber-handling grab includes, in addition to stripping blades 35 and 36, a cutting device 49, in order to create a felling head. The stripping blades can be used, if necessary, to strip a tree that is still standing and to cut and load the timber. The stripping blades are securely supported by means of an auxiliary frame 20 according to the invention. In all six examples, the cutting device is formed of two guillotine blades 31 and 32, or 29 and 30.

The timber-handling grab of Figure 20 is otherwise similar to that in Figure 19, but in this case there are, in addition, collector grippers 43 and 44. The collector grippers are used to keep the already collected trees steady, so that the timber-handling grab can be moved to beside the next trees. In other words, it is possible to collect several trees at a time, which accelerates operations. In this case, a so-called energy-timber grab is formed. An auxiliary frame 20 is also used in supporting the collector grippers 43 and 44. In the embodiment of Figure 21, feed rollers 39 and 40 are fitted between the frame 1 and the auxiliary frame 20, by means of which a tree can be moved longitudinally. The stripping blades 35 and 36 then strip the tree.

Figures 22 - 24 show timber-handling grabs intended for large trees. In that case, the components are large, so that an auxiliary frame is unnecessary. In all three, there are two jaws including stripping and loading blades 33 and 34. In the embodiment of Figure 23, there are, in addition, collector grippers 41 and 42, thus forming an energy-wood grab. In Figure 24, instead of collector grippers there are feed rollers 37 and 38, thus forming a harvester grab.

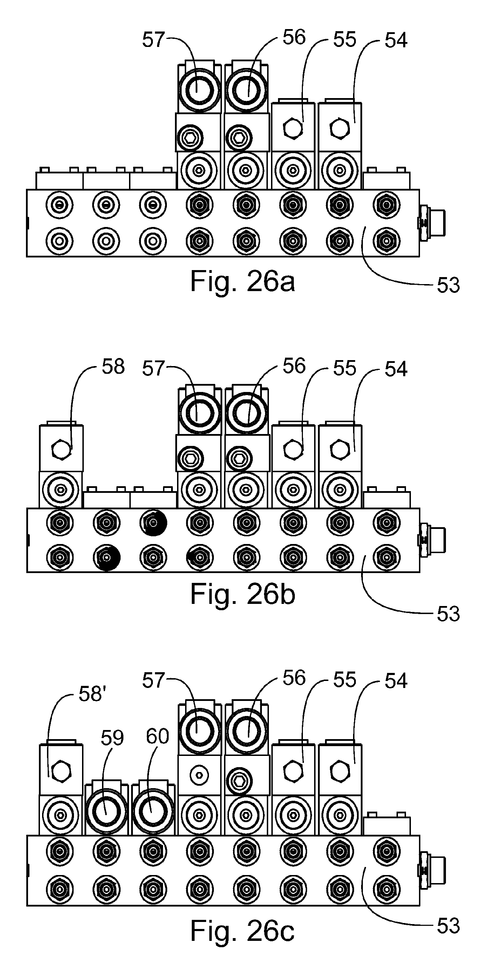

The basic idea of utilizing a multi-purpose frame is also used in the rest of the design of the timber-handling grab. For example, the control automation can have the same main features in all embodiments. This facilitates the introduction, operation, and maintenance of the timber-handling grab. In addition, according to the invention, in timber-handling grabs containing different numbers of components, there is the same type of hydraulics block, in which the number of valves is determined by the components. Figures 26a - c show hydraulics blocks 53 for three different timber-handling-grab models. In other words, the same hydraulics block is always used, in which the required number of valves are installed, the rest of the ports remaining closed. In practice, when upgrading the frame, for example, from a loader grab to a timber-feed model, the hydraulics valves are simply only added or altered as required. In one product family, an eight-port monoblock hydraulics block is used. In a loading and cutting grab, there are two valves 54 and 55 for the cutting device, as well as one valve 56 for the stripping blades and one valve 57 for tilt (Figure 26a). Thus four ports remain free. If collector grippers are added to the above grab, one additional valve 58 is added to a free port of the hydraulics block 53 (Figure 26b). If the collector grippers are replaced with feed rollers, the collector grippers' valve 58' is used to compress the feed rollers (Figure 26c). In addition to this, two valves 59 and 60 are added to hydraulics block 53, for the hydraulic motors of the feed rollers. Now one port still remains free, to which a valve, for example for a rotator, can be installed. Of course, it is true that usually there is already a valve for a rotator in the hydraulics block of the work machine.

The timber-handling grab according to the invention is multi-purpose and in it a single harvester-grab frame can utilized extremely versatilely. Several different guillotine blades, loader jaws, collector grippers, and feed-roller suspensions can be attached to the frame. The operator can select which components they wish to use according to their needs. This permits a very versatile timber-handling grab. At the same time, the operator avoids the purchase of a new timber-handling grab, if they wish additional features in their timber-handling grab. The frame can be upgraded with several different components for many different purposes. The additional components of the timber-handling grab, can be changed by the operator themselves, without extensive alteration work. The multi-purpose frame is also cheap in terms of manufacture. In practice, only one type of frame need be made and the operator can select the additional components they want. Of course, the dimensioning of the frame can vary in different size classes. Spare-parts and maintenance operations are also facilitated when one and the same frame is in use. As there are then only a few different models, the number of spare-parts items is small.

## Claims

1. Timber-handling grab, which includes a frame (1) and a grab (18) equipped with operating devices, which grab is formed of opposing jaws (19) pivoted on the arms (45, 46) of the frame (1), extending between the arms (45, 46), as well as possibly one or more of the following components, i.e. a cutting device (49), collector jaws (50), a feed device (51), and/or stripping blades (52), **characterized in that** several alternative attachment points (2 - 17) are arranged on the frame (1), for attaching alternative components to the frame (1).

2. Timber-handling grab according to Claim 1, **characterized in that** one component is an auxiliary frame (20), which is arranged to be attached to the frame (1), in order to support alternative components.

3. Timber-handling grab according to Claim 2, **characterized in that** additional attachment points (21, 22, 27, 28) are arranged on the auxiliary frame (20), in order to attach alternative components to the frame (1).

4. Timber-handling grab according to any of Claims 1 - 3, **characterized in that** the component is supported between the frame (1) and the auxiliary frame (20).

5. Timber-handling grab according to any of Claims 2 - 4, **characterized in that** the timber-handling grab further includes an additional auxiliary frame, which is located on the opposite end of the frame (1) to the auxiliary frame (20).

6. Timber-handling grab according to any of Claims 1 - 5, **characterized in that** the attachment points (2 - 17) are feed-throughs or bearing recesses.

7. Timber-handling grab according to any of Claims 3 - 6, **characterized in that** the additional attachment points (22, 23, 27, 28) are feed-throughs or bearing recesses.

8. Timber-handling grab according to any of Claims 1 - 7, **characterized in that** the timber-handling grab includes a cutting device (49), in order to create a felling head.

9. Timber-handling grab according to Claim 8, **characterized in that** the timber-handling grab further includes collector jaws (50), in order to create an energy-timber grab.

10. Timber-handling grab according to Claim 8, **characterized in that** the timber-handling grab further includes a feed device (50) and stripping blades (52), in order to create a harvester grab.

11. Timber-handling grab according to any of Claims 1 - 10, **characterized in that** the cutting device (49) is a guillotine, which is formed of two guillotine blades (29, 30, 31, 32) pivoted to the frame (1).

12. Timber-handling grab according to any of Claims 8 - 10, **characterized in that,** in all timber-handling devices containing different numbers of components, there is a similar hydraulics block (53), in which there is a number of valves (54 - 60) determined by the components.

13. Timber-handling grab according to any of Claims 1 - 12, **characterized in that** the components are detachably attached to the frame (1) and/or to the auxiliary frame (20).
